# EUROPEAN PATENT APPLICATION

(11) **EP 4 807 948 A2**
(43) Date of publication of application: **16.09.2026**
(21) Application number: 26163904.1
(22) Date of filing: 11.03.2026
(51) Int. Cl.: H02K 1/32, H02K 5/16, H02K 7/00, H02K 15/16, H02K 16/02

(54) **POWERTRAIN, MOUNTING APPARATUS THEREOF, AND ELECTRIC VEHICLE**

(30) Priority: 12.03.2025 CN 202520433003 U
(71) Applicant: HUAWEI TECHNOLOGIES CO., LTD., Shenzhen 518129 (CN)
(72) Inventor: HUANG, Zhen, Shenzhen, 518129 (CN); MA, Senlin, Shenzhen, 518129 (CN)
(74) Representative: Gill Jennings & Every LLP

(57) **Abstract**

This application provides a powertrain, a mounting apparatus thereof, and an electric vehicle. A housing of the powertrain is configured to accommodate rotors and stators of two drive motors. The housing includes a middle partition plate, the middle partition plate includes two bearing containers and two grooves, openings of the two bearing containers face away from each other along an axial direction of the drive motor, and each bearing container is configured to rotatably connect to a motor shaft of one drive motor. The two grooves are respectively distributed at bottoms of the two bearing containers, openings of the grooves face away from each other along the axial direction of the drive motor, a bottom of each groove includes an oil outlet hole, and the oil outlet holes of the two grooves are configured to respectively deliver oil transmitted by an internal flow channel of the middle partition plate to the motor shafts that are rotatably connected to the two bearing containers. In this solution, in a powertrain assembly process, a mandrel may be inserted into the groove used to form the oil outlet hole, to prevent the rotor from being misaligned by a magnetic force of the stator during mounting, and simplify an assembly apparatus and an assembly process.

## Description

### TECHNICAL FIELD

This application relates to the field of electric vehicle technologies, and in particular, to a powertrain, a mounting apparatus thereof, and an electric vehicle.

### BACKGROUND

A powertrain includes a drive motor, and the drive motor includes a stator, a rotor, and a motor shaft. The rotor is sleeved on the motor shaft. During mounting of the drive motor, the stator is first mounted into a housing of the powertrain, and then is co-assembled with the motor shaft fastened to the rotor. However, because the rotor includes magnetic steel, during co-assembly of the rotor, the motor shaft, and the stator, a stator core of the stator exerts a magnetic force on the rotor, causing the rotor to be misaligned and damaging walls of the rotor and the stator. Currently, a tooling post positioning a rotor and a motor shaft is mainly used to penetrate a housing of a powertrain, and two ends of the tooling post are fixed, so that the motor shaft fastened to the rotor moves into the housing of the powertrain through rotation along an outer periphery of the tooling post. However, for a dual-motor powertrain, mounting is complicated in this manner.

### SUMMARY

This application provides a powertrain, a mounting apparatus thereof, and an electric vehicle, so that in a mounting process of the powertrain, no additional support structure is needed to prevent a rotor of a drive motor from being misaligned by a magnetic force of a stator, thereby simplifying an assembly apparatus and an assembly process.

According to a first aspect, this application provides a powertrain. A housing of the powertrain is configured to accommodate rotors and stators of two drive motors. The housing includes a middle partition plate, the middle partition plate includes two bearing containers and two grooves, openings of the two bearing containers face away from each other along an axial direction of the drive motor, and each bearing container is configured to rotatably connect to a motor shaft of one drive motor. The two grooves are respectively distributed at bottoms of the two bearing containers. The openings of the grooves face away from each other along the axial direction of the drive motor. A bottom of each groove includes an oil outlet hole. The oil outlet holes of the two grooves are configured to respectively deliver oil transmitted by an internal flow channel of the middle partition plate to the motor shafts that are rotatably connected to the two bearing containers.

In this embodiment of this application, in a process of mounting the drive motor in the powertrain, the stator of the drive motor is first interference-fitted into the housing of the powertrain, and then the motor shaft fastened to the rotor is co-assembled into the housing. However, in a process of mounting the rotor into the housing, it is difficult to position and guide the rotor, and due to magnetic steel included in the rotor, the rotor generates an attractive force on a stator core of the stator, causing the rotor to be misaligned and damaging walls of the stator and the rotor. Therefore, during co-assembly, the rotor needs to be positioned and guided, to avoid misalignment of the rotor. The two grooves are respectively distributed at the bottoms of the two bearing containers, and the openings of the grooves face away from each other along the axial direction of the drive motor, so that in a process of mounting the rotor of the drive motor into the housing of the powertrain, a mandrel may be inserted into the groove. In this way, the rotor and the motor shaft of the drive motor may be inserted into the housing along the mandrel, to avoid misalignment of the rotor, thereby ensuring assembly reliability of the rotor.

In this embodiment of this application, the bottom of each groove includes the oil outlet hole, and the oil outlet holes of the two grooves are configured to respectively deliver oil transmitted by the internal flow channel of the middle partition plate to the motor shafts that are rotatably connected to the two bearing containers. Therefore, the oil transmitted by the internal flow channel of the middle partition plate can be simultaneously input into the motor shaft of the two drive motors, to implement parallel flow of the oil. Further, the oil in the internal flow channel of the middle partition plate may be simultaneously used for cooling and lubrication on the rotors of the two drive motors and two planetary reducers. This helps improve cooling and lubrication efficiency of the powertrain, and may further simplify arrangement of the internal flow channel in the housing. In this embodiment of this application, the groove that is used to form the oil outlet hole and that is of the middle partition plate is used as a support structure for supporting the mandrel, to prevent the rotor from being misaligned by a magnetic force of the stator in the mounting process, thereby simplifying a structure and an assembly apparatus.

In this embodiment of this application, each bearing container is configured to accommodate a bearing of one motor shaft, an inner wall of each bearing container is configured to fasten an outer ring of the bearing of the motor shaft, and each motor shaft is configured to fasten an inner ring of the bearing of the motor shaft. In a process of mounting the motor shaft and the rotor along the mandrel, in an embodiment, the bearing may be pre-interference-fitted at one end of the motor shaft, and assembly is completed after the bearing moves to the bearing container and is fastened to the bearing container. In an embodiment, the bearing may be pre-assembled into the bearing container, and assembly is completed after one end of the motor shaft is inserted into the bearing and is fastened to the bearing.

In this embodiment of this application, the two grooves are arranged by using the two bearing containers in the middle partition plate of the housing, and the openings of the two grooves face away from each other along the axial direction of the drive motor, so that the mandrels may be inserted into the groove in a direction of the openings of the two grooves, and further the motor shaft and the rotor are sleeved on the mandrel. The mounting is performed by sliding along an outer periphery of the mandrel, so that the rotor can be prevented from being misaligned by a magnetic force of the stator in a mounting process, and the groove that is used to form the oil outlet hole and that is of the middle partition plate can be directly used as the support structure for supporting the mandrel, thereby simplifying the assembly apparatus. For the oil outlet hole of the bottom of each groove, in an operating process of the powertrain, the oil in the internal flow channel of the middle partition plate may be output, through the two oil outlet holes, to space of the motor shaft originally used to allow the mandrel to pass through, to implement parallel flow of the oil, thereby helping improve cooling and lubrication efficiency of the powertrain.

In an embodiment, the two grooves and the middle partition plate of the housing of the powertrain are integrally formed by casting, which helps improve rigidity of the groove and the housing, and it is more convenient to use the groove to support the mandrel for mounting the motor shaft and the rotor.

In an embodiment, the groove is coaxial with a bearing container in which the groove is located.

In this embodiment of this application, the groove is coaxial with the bearing container in which the groove is located, and the bearing container is coaxial with the motor shaft that is rotatably connected to the bearing container, so that the groove is coaxial with the motor shaft. This avoids misalignment of the mandrel from an axis of the motor shaft when the mandrel is inserted into the groove, and avoids abrasion between the rotor and the stator due to misalignment of the motor shaft and the rotor during co-assembly along the mandrel, ensuring that the mounting process is more reliable.

In an embodiment, the groove may be specifically a circular groove or a square groove, provided that a center of the groove is coaxial with the bearing container in which the groove is located.

In an embodiment, along a radial direction of the drive motor, a diameter of the oil outlet hole is less than a width of the opening of the groove.

In this embodiment of this application, along the radial direction of the drive motor, the diameter of the oil outlet hole is less than the width of the opening of the groove. This can prevent the mandrel from passing through the bottom of the groove and entering the oil outlet hole when being inserted into the groove, and it is more convenient for the bottom of the groove to support and limit the mandrel, thereby improving assembly reliability of the rotor.

In this embodiment of this application, if the diameter of the oil outlet hole is equal to the width of the opening of the groove, the mandrel passes through the groove and the oil outlet hole, so that the mandrel cannot be limited by the groove along the axial direction of the drive motor, which can easily lead to unreliable assembly of the rotor.

In an embodiment, along the radial direction of the drive motor, a width of the bottom of the groove is less than the width of the opening of the groove.

In this embodiment of this application, along the radial direction of the drive motor, the width of the bottom of the groove is less than the width of the opening of the groove. The width of the opening of the groove is relatively large, so that the mandrel enters into the opening of the groove to abut against the bottom of the groove, thereby implementing mounting of the mandrel in a position-limiting manner. The width of the bottom of the groove is relatively small, so that the mandrel can be prevented from passing through the bottom of the groove, thereby ensuring mounting stability of the motor shaft and the rotor.

In an embodiment, along the radial direction of the drive motor, the width of the bottom of the groove is equal to the width of the opening of the groove, and the diameter of the oil outlet hole is less than the width of the bottom of the groove. In this case, the mandrel may be limited and abutted by a part of the bottom of the groove other than the oil outlet hole, so that the rotor of the drive motor can be reliably assembled.

In an embodiment, along the radial direction of the drive motor, the diameter of the oil outlet hole is less than or equal to the width of the bottom of the groove. In this way, the oil in the internal flow channel of the middle partition plate is delivered from the groove through the oil outlet hole into the motor shaft, and reliable strength of the middle partition plate is ensured, to prevent structural strength of the middle partition plate from being affected by an excessive diameter of the oil outlet hole.

In an embodiment, along the radial direction of the drive motor, a width of the groove gradually increases from the bottom of the groove toward the opening of the groove.

In this embodiment of this application, along the radial direction of the drive motor, the width of the groove gradually increases from the bottom of the groove toward the opening of the groove, so that a circumferential wall of the groove is in a frustum shape, and the frustum-shaped circumferential wall of the groove may have a larger contact area with the mandrel having a pointed bottom. This improves stability of the mandrel after insertion, thereby helping improve stability when the rotor is assembled into the housing along the outer periphery of the mandrel.

In this embodiment of this application, the frustum-shaped circumferential wall of the groove further has a guiding function for the mandrel, so that the mandrel can smoothly enter into the groove.

In an embodiment, the middle partition plate includes a protrusion. The protrusion protrudes from the bottom of the bearing container, and the groove is distributed on an end face that is of the protrusion and that is away from the bottom of the bearing container.

In this embodiment of this application, the protrusion protrudes from the bottom of the bearing container, and the groove is distributed on the end face that is of the protrusion and that is away from the bottom of the bearing container, so that the groove is closer to an assembly direction of the rotor of the drive motor. This facilitates the mandrel to quickly enter the groove, and prevents the structural strength of the middle partition plate from being affected by collision between the mandrel and the bottom of the bearing container, improving stability of the powertrain.

In an embodiment, along the axial direction of the drive motor, a length of the protrusion is greater than a depth of one bearing container.

In this embodiment of this application, along the axial direction of the drive motor, the length of the protrusion is greater than the depth of the bearing container. In this case, the groove distributed on the end face of the protrusion may be farther away from the bottom of the bearing container, and the mandrel may be quickly assembled with the groove in the end face of the protrusion.

In this embodiment of this application, the length of the protrusion along the axial direction of the drive motor is relatively large, the groove is located in the end face of the protrusion, and the oil outlet hole is located at the bottom of the groove. Therefore, it is more convenient to feed the oil in the internal flow channel of the middle partition plate from the oil outlet hole into the motor shaft through a flow channel in the protrusion.

In an embodiment, along the axial direction of the drive motor, a depth of the groove is less than the length of the protrusion.

In this embodiment of this application, along the axial direction of the drive motor, the depth of the groove is less than the length of the protrusion. The depth of the groove is relatively small, so that it is more convenient to process the groove without affecting structural strength of the protrusion. The length of the protrusion is relatively large, so that the structural strength of the protrusion is strong, which allows the groove to be distributed closer to an assembly direction of the rotor of the drive motor. This facilitates the mandrel to quickly enter the groove. Along the axial direction of the drive motor, the depth of the groove is less than the length of the protrusion, which helps keep the mandrel stable and reliable when the mandrel is quickly assembled with the groove.

In this embodiment of this application, if the depth of the groove is greater than the length of the protrusion, the groove needs to be arranged based on a thickness of the middle partition plate, which easily causes a reduction in structural strength of the housing.

In an embodiment, the motor shaft includes a shaft hole, the shaft hole extends through the motor shaft along the axial direction of the drive motor, the protrusion protrudes toward the shaft hole, and an inner diameter of the shaft hole is greater than an inner diameter of the oil outlet hole.

In this embodiment of this application, the motor shaft includes the shaft hole, and the shaft hole extends through the motor shaft along the axial direction of the drive motor, so that oil can flow in the shaft hole of the motor shaft, thereby cooling the rotor of the drive motor.

In this embodiment of this application, the protrusion protrudes toward the shaft hole, so that the groove distributed on the end face of the protrusion and that is away from the bottom of the bearing container and the oil outlet hole of the bottom of the groove may also face the shaft hole. Therefore, it is more convenient to smoothly output the oil in the internal flow channel of the middle partition plate from the oil outlet hole into a shaft bore of the motor shaft through an internal flow channel in the protrusion.

In this embodiment of this application, the inner diameter of the shaft hole is greater than the inner diameter of the oil outlet hole. In this way, when the shaft hole can accommodate the mandrel, the oil outlet hole in the bottom of the groove cannot accommodate the mandrel, to avoid that the mandrel passes through the oil outlet hole and cannot stably guide assembly of the motor shaft and the rotor, thereby ensuring assembly reliability.

In an embodiment, the shaft hole includes a first segment and a second segment. An inner diameter of the first segment is greater than an inner diameter of the second segment, and the protrusion is configured to be inserted into the first segment. A part that is of the motor shaft and in which the second segment is located is configured to fasten the rotor. Along the axial direction of the drive motor, the protrusion is spaced from the second segment, and the opening of the groove faces the second segment.

In this embodiment of this application, the inner diameter of the first segment is greater than the inner diameter of the second segment. The protrusion is configured to be inserted into the first segment, and the inner diameter of the first segment is relatively large, so that the protrusion is conveniently inserted into the first segment, and further along the radial direction of the drive motor, the protrusion is spaced from the first segment, to avoid abrasion between the first segment and the protrusion during rotation of the motor shaft. The inner diameter of the second segment is relatively small, to facilitate gap-free fit between the mandrel and the shaft hole of the motor shaft, so that an assembly process of the rotor and the motor shaft is more stable and reliable, and the part that is of the motor shaft and in which the second segment is located has higher structural strength, further ensuring reliable fastening of the rotor.

In this embodiment of this application, along the axial direction of the drive motor, the protrusion is spaced from the second segment, to avoid abrasion between the protrusion and the second segment of the motor shaft during rotation.

In this embodiment of this application, the opening of the groove faces the second segment, so that it is more convenient to directly feed oil from the oil outlet hole in the bottom of the groove into the second segment of the shaft hole through the opening of the groove. This also helps reduce leakage of the oil through a gap between the first segment and the opening of the groove, allowing more oil to be delivered through the motor shaft, thereby ensuring that the oil can meet a lubrication requirement of the rotor of the drive motor and the planetary reducer.

In an embodiment, a limiting groove is provided in an outer side of the motor shaft. The limiting groove is provided around an outer side wall of the first segment of the shaft hole. The limiting groove is configured to abut against the bearing of the motor shaft, so that the rotor and the motor shaft can be limited by the limiting groove and the bearing container when being assembled by using the mandrel, making the assembly more precise.

In an embodiment, a gap between the protrusion and the first segment is used for accommodating a conductive ring, and the conductive ring is configured to electrically connect the protrusion and the first segment.

In this embodiment of this application, the gap between the protrusion and the first segment is used for accommodating the conductive ring. Compared with disposing the conductive ring on an outer wall of the motor shaft, reusing space of the protrusion along the radial direction of the drive motor to arrange the conductive ring helps shorten an axial size of the powertrain. The conductive ring is configured to electrically connect the protrusion and the first segment, so that a shaft current generated during rotation of the motor shaft may be conducted to the conductive ring through the first segment, and then be conducted to the protrusion on the middle partition plate through the conductive ring, thereby implementing grounding, and avoiding electric corrosion of the bearing of the motor shaft.

In an embodiment, the protrusion includes a fastening segment and a connection segment. The fastening segment is closer to the second segment than the connection segment, an outer diameter of the connection segment is greater than an outer diameter of the fastening segment, the fastening segment is configured to fasten the conductive ring, and an end face that is of the connection segment and that faces the fastening segment is configured to abut against the conductive ring.

In this embodiment of this application, the outer diameter of the connection segment is greater than the outer diameter of the fastening segment, so that it is more convenient to fasten the conductive ring to the fastening segment from a direction of the opening of the bearing container. The outer diameter of the connection segment is greater than the outer diameter of the fastening segment, so that the end face that is of the connection segment and that faces the fastening segment may be used to abut against the conductive ring, to prevent the conductive ring from rotating with the motor shaft in the first segment.

In an embodiment, the shaft hole is configured to accommodate an oil guide pipe, one end of the oil guide pipe is fastened to the protrusion to receive oil delivered from the oil outlet hole, and the other end of the oil guide pipe is configured to extend into the planetary reducer to deliver the oil to the planetary reducer.

In this embodiment of this application, because the protrusion is located in the first segment of the shaft hole, an oil deliver distance of the oil outlet hole in the protrusion is short. The oil guide pipe is disposed in the shaft hole of the motor shaft, the end of the oil guide pipe is fastened to the protrusion to receive the oil delivered by the oil outlet hole, and the other end of the oil guide pipe is configured to extend into the planetary reducer to deliver the oil to the planetary reducer, to prevent the oil in the shaft hole of the motor shaft from being completely thrown out of the motor shaft during rotation of the motor shaft, so that the oil output from the oil outlet hole can be delivered for a longer distance. Further, this ensures that the planetary reducer at the other end of the oil guide pipe can receive sufficient oil for lubrication, to meet a lubrication requirement of the gear shaft assembly of the planetary reducer.

In an embodiment, the oil guide pipe is rotatably connected to the motor shaft by using a support bearing.

In an embodiment, both an outer wall of the oil guide pipe and the outer wall of the motor shaft include a through hole, so that oil in the oil guide pipe may flow out from the through hole in the outer wall of the oil guide pipe and the through hole in the outer wall of the motor shaft to the rotor of the drive motor, thereby cooling the rotor and ensuring normal operation of the drive motor.

According to a second aspect, this application provides a mounting apparatus of a powertrain. The mounting apparatus is configured to mount the powertrain according to the first aspect, the housing is configured to fasten the stator, and the motor shaft is configured to fasten the rotor. The mounting apparatus includes a mandrel, one end of the mandrel is inserted into the groove and abuts against the bottom or a circumferential wall of the groove. The motor shaft fastened to the rotor is configured to be sleeved on an outer periphery of the mandrel and move to the bearing container of the middle partition plate along the mandrel.

In this embodiment of this application, the end of the mandrel is inserted into the groove and abuts against the bottom or the circumferential wall of the groove, so that the mandrel can be in full contact with the groove and is limited by the groove, thereby helping assembly of the mandrel be more stable and reliable.

In this embodiment of this application, the motor shaft fastened to the rotor is configured to be sleeved on the outer periphery of the mandrel and move to the bearing container of the middle partition plate along the mandrel, so that the motor shaft and the rotor can be mounted along the outer periphery of the mandrel. In this way, the rotor is not misaligned under a magnetic force of the stator, thereby improving assembly reliability of the rotor.

In this embodiment of this application, the groove that is used to form the oil outlet hole and that is of the middle partition plate is used as a support structure for supporting the mandrel, to prevent the rotor from being misaligned by a magnetic force of the stator in the mounting process, thereby simplifying a structure and an assembly apparatus.

In an embodiment, the mounting apparatus of the powertrain further includes a reducer housing pre-mounting apparatus. The gear shaft assembly of the planetary reducer includes a sun gear. In an embodiment, the sun gear is formed at one end of the motor shaft of the drive motor, so that the motor shaft and the sun gear are of an integrated structure. Therefore, during co-assembly of the motor shaft and the rotor, a part of the gear shaft assembly of the planetary reducer further needs to be mounted to the motor shaft and then mounted into the housing. The reducer housing pre-mounting apparatus may fasten the planetary reducer in a mounting process. The reducer housing pre-mounting apparatus may cooperate with the mandrel to jointly mount the motor shaft, the rotor, and the part of gear shaft assembly of the planetary reducer into the housing, and finally mount the other part of the gear shaft assembly of the planetary reducer and a reducer housing.

According to a third aspect, this application provides an electric vehicle, where the electric vehicle includes a vehicle frame and the powertrain according to the first aspect. The vehicle frame is configured to fasten the powertrain, and the drive motor of the powertrain is configured to drive a wheel.

In the powertrain in this embodiment of this application, the two grooves are arranged by using the two bearing containers in the middle partition plate of the housing, the openings of the two grooves face away from each other along the axial direction of the drive motor, and the bottom of each groove is provided with the oil outlet hole. Therefore, oil in the internal flow channel of the middle partition plate may be output to the motor shaft through the two oil outlet holes, thereby implementing parallel flow of the oil, and helping improve cooling and lubrication efficiency of the powertrain. In this application, mandrels may be inserted into the grooves respectively from directions of the openings of the two grooves, the motor shaft and the rotor are sleeved on the mandrel and slide along the mandrel into the housing for mounting, and the groove that is used to form the oil outlet hole and that is of the middle partition plate is directly used as a structure for supporting the mandrel, to prevent the rotor from being misaligned by a magnetic force of the stator in a mounting process, thereby simplifying a structure and an assembly apparatus.

### BRIEF DESCRIPTION OF DRAWINGS

To describe the technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is another diagram of a powertrain according to an embodiment of this application;
FIG. 4 is a diagram of mounting a mounting apparatus and a powertrain according to an embodiment of this application;
FIG. 5 is a diagram of a housing of a powertrain according to an embodiment of this application;
FIG. 6 is a partially enlarged view of a part M1 of the powertrain in FIG. 3;
FIG. 7 is a partially enlarged view of a part M2 of the housing in FIG. 5;
FIG. 8 is another diagram of a housing of a powertrain according to an embodiment of this application; and
FIG. 9 is another diagram of a housing of a powertrain according to an embodiment of this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

This application provides a powertrain. A housing of the powertrain is configured to accommodate rotors and stators of two drive motors. The housing includes a middle partition plate, the middle partition plate includes two bearing containers and two grooves, openings of the two bearing containers face away from each other along an axial direction of the drive motor, and each bearing container is configured to rotatably connect to a motor shaft of one drive motor. The two grooves are respectively distributed at bottoms of the two bearing containers. The openings of the grooves face away from each other along the axial direction of the drive motor. A bottom of each groove includes an oil outlet hole. The oil outlet holes of the two grooves are configured to respectively deliver oil transmitted by an internal flow channel of the middle partition plate to the motor shafts that are rotatably connected to the two bearing containers.

The two grooves are arranged by using the two bearing containers in the middle partition plate of the housing, the openings of the two grooves face away from each other along the axial direction of the drive motor, and the bottom of each groove is provided with the oil outlet hole. Therefore, the oil in the internal flow channel of the middle partition plate may be output to the motor shaft through the two oil outlet holes, thereby implementing parallel flow of the oil, and helping improve cooling and lubrication efficiency of the powertrain. In this application, mandrels may be inserted into the grooves respectively from the openings of the two grooves, the motor shaft and the rotor are sleeved on the mandrel and slide along the mandrel into the housing for mounting, and the groove that is used to form the oil outlet hole and that is of the middle partition plate is directly used as a structure for supporting the mandrel, to prevent the rotor from being misaligned by a magnetic force of the stator in a mounting process, thereby simplifying a structure and an assembly apparatus.

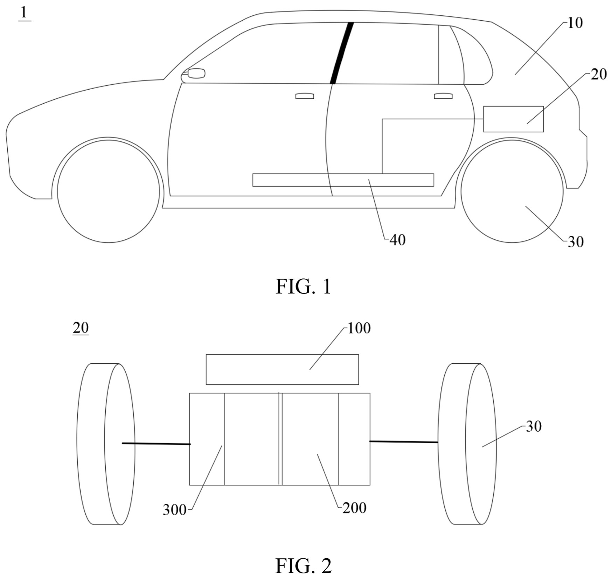

FIG. 1 is a diagram of an electric vehicle 1 according to an embodiment of this application.

In an embodiment, the electric vehicle 1 includes a vehicle frame 10 and a powertrain 20. As shown in FIG. 1, the vehicle frame 10 is configured to fasten the powertrain 20. In this embodiment of this application, the electric vehicle 1 is a wheeled device driven or pulled by a power apparatus. In this embodiment of this application, the powertrain 20 is configured to drive a wheel 30.

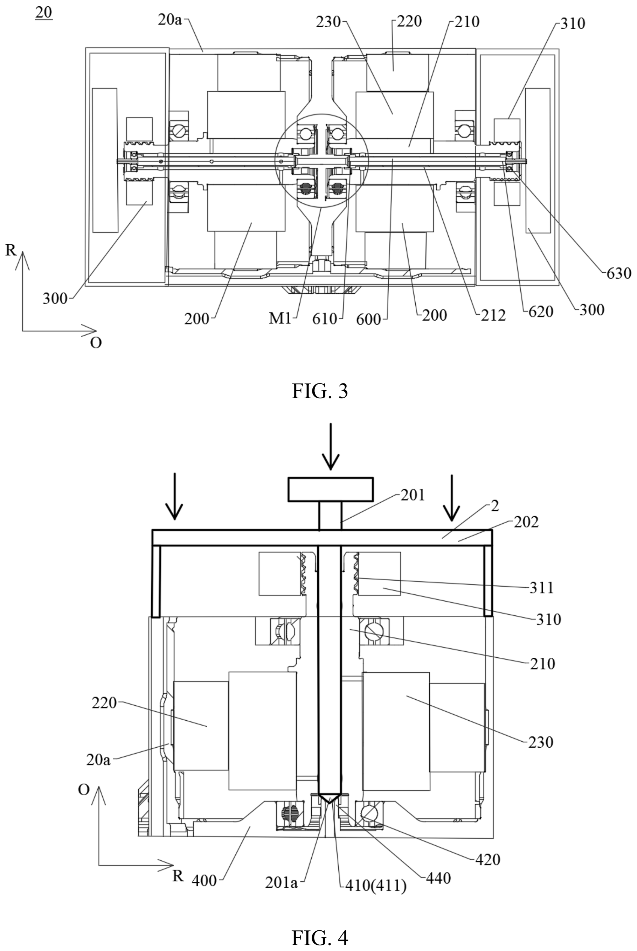

FIG. 2 is a diagram of a powertrain 20 according to an embodiment of this application. FIG. 3 is another diagram of a powertrain 20 according to an embodiment of this application.

In an embodiment, as shown in FIG. 2 and FIG. 3, the powertrain 20 includes a power supply apparatus 100, a drive motor 200, and a planetary reducer 300.

In this embodiment of this application, the drive motor 200 includes a motor shaft 210, a stator 220, and a rotor 230, and the planetary reducer 300 includes a gear shaft assembly 310. The rotor 230 in the drive motor 200 is securely sleeved on the motor shaft 210, and the stator 220 drives the rotor 230 to rotate after receiving an alternating current transmitted by the power supply apparatus 100, thereby driving the motor shaft 210 to rotate. The motor shaft 210 of the drive motor 200 is configured to transfer kinetic energy to the gear shaft assembly 310 of the planetary reducer 300, and further transmit power to the wheel 30 through an output half shaft of the planetary reducer 300, thereby driving the wheel 30 to move.

In an embodiment, the powertrain 20 includes two drive motors 200 and two planetary reducers 300. As shown in FIG. 3, in an axial direction O of the powertrain 20, the two planetary reducers 300 are respectively arranged on two sides of the two drive motors 200. The stator 220 of each drive motor 200 is configured to: receive a current from a power battery 40 to rotate the rotor 230 of the drive motor 200, and transmit power to one planetary reducer 300 through the motor shaft 210, to drive the wheel 30 on one side of the electric vehicle 1 to move. The two drive motors 200 and the two planetary reducers 300 are respectively configured to control moving of wheels 30 on two sides of the electric vehicle 1.

In an embodiment, the motor shaft 210 includes an internal oil channel. As shown in FIG. 3, the internal oil channel of the motor shaft 210 is configured to receive oil delivered by an internal oil channel of a housing 20a of the powertrain 20. Oil in the internal oil channel of the motor shaft 210 is used to cool the rotor 230 of the drive motor 200 and lubricate the gear shaft assembly 310 of the planetary reducer 300, so that the planetary reducer 300 can operate normally.

Currently, during mounting of a drive motor in a powertrain, a positioned tooling post is mainly used to penetrate a housing of the powertrain, and two ends of the tooling post are fixed, so that a motor shaft fastened to a rotor moves into the housing of the powertrain through rotation along the tooling post. However, for a dual-motor powertrain, mounting is complicated and inconvenient to perform in this manner.

In this embodiment of this application, two grooves are formed at bottoms of bearing containers of a middle partition plate in the housing of the powertrain, and the two grooves are used as support posts when the motor shaft and the rotor are co-assembled, so that a mandrel can abut against the groove, and the motor shaft sleeved with the rotor can be co-assembled into the housing of the powertrain along the mandrel without misalignment.

FIG. 4 is a diagram of mounting a mounting apparatus 2 and a powertrain 20 according to an embodiment of this application. An arrow represents an application direction of a force. In FIG. 4, the arrow represents that the motor shaft 210 and the rotor 230 are mounted into the housing 20a from top to bottom.

The following describes the mounting apparatus 2 of the powertrain 20 in this embodiment of this application.

In an embodiment, as shown in FIG. 4, the mounting apparatus 2 of the powertrain 20 is configured to mount the powertrain 20, the housing 20a of the powertrain 20 is configured to fasten the stator 220, and the motor shaft 210 is configured to fasten the rotor 230. The mounting apparatus 2 includes a mandrel 201, and one end 201a of the mandrel 201 is configured to be inserted into a groove 410 of a middle partition plate 400 and abut against a bottom 411 or a circumferential wall of the groove 410. The motor shaft 210 fastened to the rotor 230 is configured to be sleeved on an outer periphery of the mandrel 201 and move to a bearing container 420 of the middle partition plate 400 along the mandrel 201.

In this embodiment of this application, the end 201a of the mandrel 201 is inserted into the groove 410 and abuts against the bottom 411 or the circumferential wall of the groove 410, so that the mandrel 201 can be in full contact with the groove 410 and is limited by the groove 410, thereby helping assembly of the mandrel 201 be more stable and reliable.

In this embodiment of this application, the motor shaft 210 fastened to the rotor 230 is configured to be sleeved on the outer periphery of the mandrel 201 and move to the bearing container 420 of the middle partition plate 400 along the mandrel 201, so that the motor shaft 210 and the rotor 230 can be mounted along the outer periphery of the mandrel 201. In this way, the rotor 230 is not misaligned under a magnetic force of the stator 220, thereby improving assembly reliability of the rotor 230.

In this embodiment of this application, the groove 410 that is used to form an oil outlet hole 4110 and that is of the middle partition plate 400 is used as a support structure for supporting the mandrel 201, to prevent the rotor 230 from being misaligned by a magnetic force of the stator 220 in a mounting process, thereby simplifying a structure and an assembly apparatus.

In an embodiment, as shown in FIG. 3 and FIG. 4, the mounting apparatus 2 of the powertrain 20 further includes a reducer housing pre-mounting apparatus 202. The gear shaft assembly 310 of the planetary reducer 300 includes a sun gear 311. In an embodiment, the sun gear 311 is formed at one end of the motor shaft 210 of the drive motor 200, so that the motor shaft 210 and the sun gear 311 are of an integrated structure. Therefore, during co-assembly of the motor shaft 210 and the rotor 230, a part of the gear shaft assembly 310 of the planetary reducer 300 further needs to be mounted to the motor shaft 210 and then mounted into the housing 20a. The reducer housing pre-mounting apparatus 202 may fasten the planetary reducer 300 in a mounting process. The reducer housing pre-mounting apparatus 202 may cooperate with the mandrel 201 to jointly mount the motor shaft 210, the rotor 230, and the part of gear shaft assembly 310 of the planetary reducer 300 into the housing 20a, and finally mount the other part of the gear shaft assembly 310 of the planetary reducer 300 and a reducer housing.

The following describes in detail the powertrain 20 provided in this embodiment of this application.

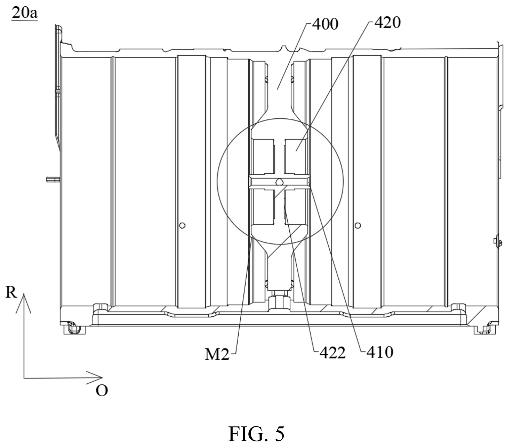

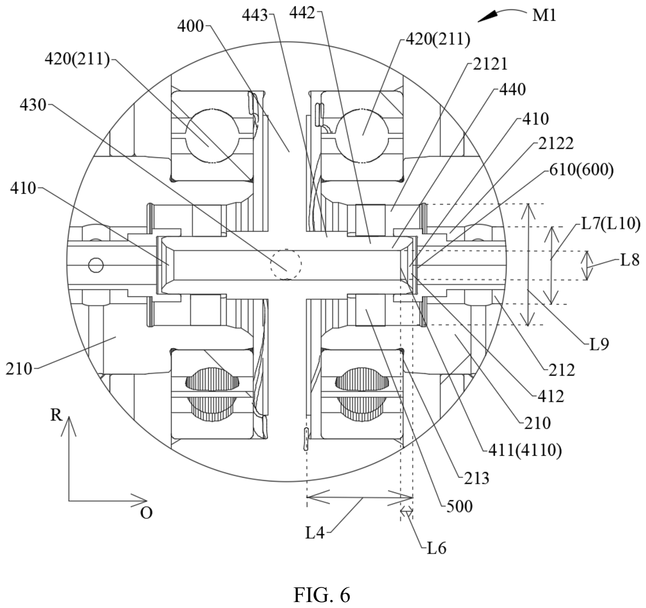

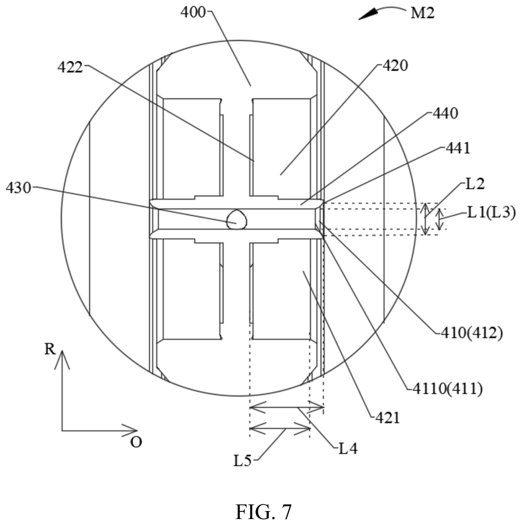

FIG. 5 is a diagram of a housing 20a of a powertrain 20 according to an embodiment of this application. FIG. 6 is a partially enlarged view of a part M1 of the powertrain 20 in FIG. 3. FIG. 7 is a partially enlarged view of a part M2 of the housing 20a in FIG. 5.

In an embodiment, as shown in FIG. 3 to FIG. 7, the housing 20a of the powertrain 20 is configured to accommodate the rotors 230 and stators 220 of the two drive motors 200. The housing 20a includes the middle partition plate 400, and the middle partition plate 400 includes the two bearing containers 420 and the two grooves 410. As shown in FIG. 7, openings 421 of the two bearing containers 420 face away from each other along an axial direction O of the drive motor 200, and each bearing container 420 is configured to rotatably connect to the motor shaft 210 of the drive motor 200. The two grooves 410 are respectively distributed at bottoms 422 of the two bearing containers 420. The openings 412 of the grooves 410 face away from each other along the axial direction O of the drive motor 200. The bottom 411 of each groove 410 includes the oil outlet hole 4110. The oil outlet holes 4110 of the two grooves 410 are configured to respectively deliver oil transmitted by an internal flow channel 430 of the middle partition plate 400 to the motor shafts 210 that are rotatably connected to the two bearing containers 420.

In this embodiment of this application, in a process of mounting the drive motor 200 in the powertrain 20, the stator 220 of the drive motor 200 is first interference-fitted into the housing 20a of the powertrain 20, and then the motor shaft 210 fastened to the rotor 230 is co-assembled into the housing 20a. However, in a process of mounting the rotor 230 into the housing 20a, it is difficult to position and guide the rotor 230, and due to magnetic steel included in the rotor 230, the rotor 230 generates an attractive force on a stator core of the stator 220, causing the rotor 230 to be misaligned and damaging walls of the stator 220 and the rotor 230. Therefore, during co-assembly, the rotor 230 needs to be positioned and guided, to avoid misalignment of the rotor 230. The two grooves 410 are respectively distributed at the bottoms 422 of the two bearing containers 420, and the openings 412 of the grooves 410 face away from each other along the axial direction O of the drive motor 200, so that in a process of mounting the rotor 230 of the drive motor 200 into the housing 20a of the powertrain 20, the mandrel 201 may be inserted into the groove 410. In this way, the rotor 230 and the motor shaft 210 of the drive motor 200 may be inserted into the housing 20a along the mandrel 201, to avoid misalignment of the rotor 230, thereby ensuring assembly reliability of the rotor 230.

In this embodiment of this application, the bottom 411 of each groove 410 includes the oil outlet hole 4110, and the oil outlet holes 4110 of the two grooves 410 are configured to respectively deliver oil transmitted by the internal flow channel 430 of the middle partition plate 400 to the motor shafts 210 that are rotatably connected to the two bearing containers 420. Therefore, the oil transmitted by the internal flow channel 430 of the middle partition plate 400 can be simultaneously input into the motor shaft 210 of the two drive motors 200, to implement parallel flow of the oil. Further, the oil in the internal flow channel 430 of the middle partition plate 400 may be simultaneously used for cooling and lubrication on the rotors 230 of the two drive motors 200 and the two planetary reducers 300. This helps improve cooling and lubrication efficiency of the powertrain 20, and may further simplify arrangement of the internal flow channel in the housing 20a. In this embodiment of this application, the groove 410 that is used to form the oil outlet hole 4110 and that is of the middle partition plate 400 is used as a support structure for supporting the mandrel 201, to prevent the rotor 230 from being misaligned by a magnetic force of the stator 220 in the mounting process, thereby simplifying a structure and an assembly apparatus.

In this embodiment of this application, as shown in FIG. 4 and FIG. 6, each bearing container 420 is configured to accommodate a bearing 211 of one motor shaft 210, an inner wall of each bearing container 420 is configured to fasten an outer ring of the bearing 211 of the motor shaft 210, and each motor shaft 210 is configured to fasten an inner ring of the bearing 211 of the motor shaft 210. In a process of mounting the motor shaft 210 and the rotor 230 along the mandrel 201, in an embodiment, the bearing 211 may be pre-interference-fitted at one end of the motor shaft 210, and assembly is completed after the bearing 211 moves to the bearing container 420 and is fastened to the bearing container 420. In an embodiment, the bearing 211 may be pre-assembled into the bearing container 420, and assembly is completed after one end of the motor shaft 210 is inserted into the bearing 211 and is fastened to the bearing 211.

In this embodiment of this application, two grooves 410 are arranged by using the two bearing containers 420 in the middle partition plate 400 of the housing 20a, and the openings 412 of the two grooves 410 face away from each other along the axial direction O of the drive motor 200, so that the mandrel 201 may be inserted into the groove 410 in a direction of the openings 412 of the two grooves 410, and further the motor shaft 210 and the rotor 230 are sleeved on the mandrel 201. The mounting is performed by sliding along the outer periphery of the mandrel 201, so that the rotor 230 can be prevented from being misaligned by a magnetic force of the stator 220 in a mounting process, and the groove 410 that is used to form the oil outlet hole 4110 and that is of the middle partition plate 400 can be directly used as the support structure for supporting the mandrel 201, thereby simplifying the assembly apparatus. For the oil outlet hole 4110 of the bottom 411 of each groove 410, in an operating process of the powertrain 20, the oil in the internal flow channel 430 of the middle partition plate 400 may be output, through the two oil outlet holes 4110, to space of the motor shaft 210 originally used to allow the mandrel 201 to pass through, to implement parallel flow of the oil, thereby helping improve cooling and lubrication efficiency of the powertrain 20.

In an embodiment, as shown in FIG. 5, the two grooves 410 and the middle partition plate 400 of the housing 20a of the powertrain 20 are integrally formed by casting, which helps improve rigidity of the groove 410 and the housing 20a, and it is more convenient to use the groove 410 to support the mandrel 201 for mounting the motor shaft 210 and the rotor 230.

In an embodiment, as shown in FIG. 5, the groove 410 is coaxial with a bearing container 420 in which the groove 410 is located.

In this embodiment of this application, as shown in FIG. 4 and FIG. 5, the groove 410 is coaxial with the bearing container 420 in which the groove 410 is located, and the bearing container 420 is coaxial with the motor shaft 210 that is rotatably connected to the bearing container 420, so that the groove 410 is coaxial with the motor shaft 210. This avoids misalignment of the mandrel 201 from an axis of the motor shaft 210 when the mandrel 201 is inserted into the groove 410, and avoids abrasion between the rotor 230 and the stator 220 due to misalignment of the motor shaft 210 and the rotor 230 during co-assembly along the mandrel 201, ensuring that the mounting process is more reliable.

In an embodiment, as shown in FIG. 5, the groove 410 may be specifically a circular groove or a square groove, provided that a center of the groove 410 is coaxial with the bearing container 420 in which the groove 410 is located.

In an embodiment, as shown in FIG. 7, along a radial direction R of the drive motor 200, a diameter of the oil outlet hole 4110 is less than a width of the opening 412 of the groove 410.

In this embodiment of this application, as shown in FIG. 4 and FIG. 7, along the radial direction R of the drive motor 200, the diameter of the oil outlet hole 4110 is denoted as L1, the width of the opening 412 of the groove 410 is denoted as L2, and L1<L2. This can prevent the mandrel 201 from passing through the bottom 411 of the groove 410 and entering the oil outlet hole 4110 when being inserted into the groove 410, and it is more convenient for the bottom 411 of the groove 410 to support and limit the mandrel 201, thereby improving assembly reliability of the rotor 230.

In this embodiment of this application, if the diameter of the oil outlet hole 4110 is equal to the width of the opening 412 of the groove 410, the mandrel 201 passes through the groove 410 and the oil outlet hole 4110, so that the mandrel 201 cannot be limited by the groove 410 along the axial direction O of the drive motor 200, which can easily lead to unreliable assembly of the rotor 230.

In an embodiment, as shown in FIG. 7, along the radial direction R of the drive motor 200, a width of the bottom 411 of the groove 410 is less than the width of the opening 412 of the groove 410.

In this embodiment of this application, as shown in FIG. 4 and FIG. 7, along the radial direction R of the drive motor 200, the width of the bottom 411 of the groove 410 is denoted as L3, the width of the opening 412 of the groove 410 is L2, and L3<L2. L2 is relatively large, so that the mandrel 201 enters into the opening 412 of the groove 410 to abut against the bottom 411 of the groove 410, thereby implementing mounting of the mandrel 201 in a position-limiting manner. L3 is relatively small, so that the mandrel 201 can be prevented from passing through the bottom 411 of the groove 410, thereby ensuring mounting stability of the motor shaft 210 and the rotor 230.

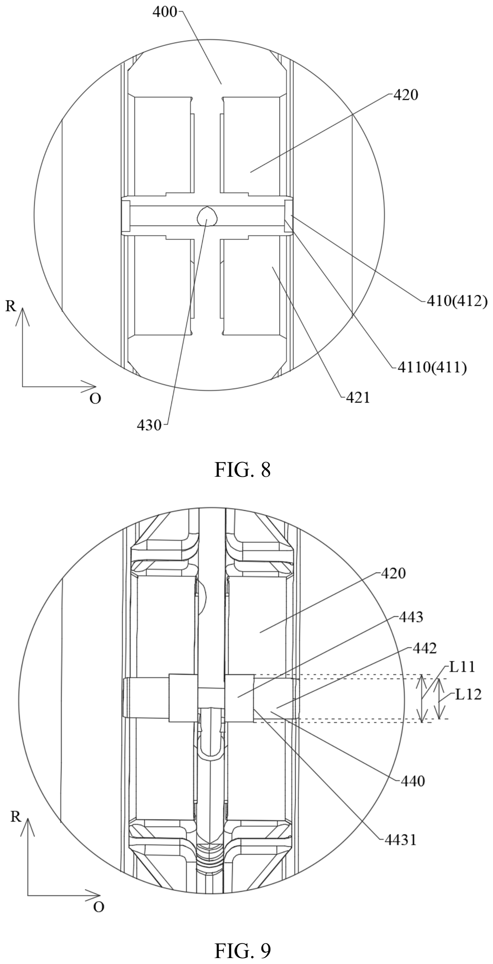

FIG. 8 is another diagram of a housing 20a of a powertrain 20 according to an embodiment of this application.

In an embodiment, as shown in FIG. 4 and FIG. 8, along the radial direction R of the drive motor 200, a width of the bottom 411 of the groove 410 is equal to a width of the opening 412 of the groove 410, and a diameter of the oil outlet hole 4110 is less than or equal to the width of the bottom 411 of the groove 410. In this case, the mandrel 201 may be limited and abutted by a part of the bottom 411 of the groove 410 other than the oil outlet hole 4110, so that the rotor 230 of the drive motor 200 can be reliably assembled.

In an embodiment, as shown in FIG. 3, FIG. 7 and FIG. 8, along the radial direction R of the drive motor 200, the diameter of the oil outlet hole 4110 is less than or equal to the width of the bottom 411 of the groove 410. In this way, the oil in the internal flow channel 430 of the middle partition plate 400 is delivered from the groove 410 through the oil outlet hole 4110 into the motor shaft 210, and reliable strength of the middle partition plate 400 is ensured, to prevent structural strength of the middle partition plate 400 from being affected by an excessive diameter of the oil outlet hole 4110.

In an embodiment, as shown in FIG. 7, along the radial direction R of the drive motor 200, a width of the groove 410 gradually increases from the bottom 411 of the groove 410 toward the opening 412 of the groove 410.

In this embodiment of this application, as shown in FIG. 4 and FIG. 7, along the radial direction R of the drive motor 200, the width of the groove 410 gradually increases from the bottom 411 of the groove 410 toward the opening 412 of the groove 410, so that a circumferential wall of the groove 410 is in a frustum shape, and the frustum-shaped circumferential wall of the groove 410 may have a larger contact area with the mandrel 201 having a pointed bottom. This improves stability of the mandrel 201 after insertion, thereby helping improve stability when the rotor 230 is assembled into the housing 20a along the outer periphery of the mandrel 201.

In this embodiment of this application, the frustum-shaped circumferential wall of the groove 410 further has a guiding function for the mandrel 201, so that the mandrel 201 can smoothly enter into the groove 410.

In an embodiment, as shown in FIG. 7, the middle partition plate 400 includes a protrusion 440. The protrusion 440 protrudes from the bottom 422 of the bearing container 420, and the groove 410 is distributed on an end face 441 that is of the protrusion 440 and that is away from the bottom 422 of the bearing container 420.

In this embodiment of this application, as shown in FIG. 4 and FIG. 7, the protrusion 440 protrudes from the bottom 422 of the bearing container 420, and the groove 410 is distributed on the end face 441 that is of the protrusion 440 and that is away from the bottom 422 of the bearing container 420, so that the groove 410 is closer to an assembly direction of the rotor 230 of the drive motor 200. This facilitates the mandrel 201 to quickly enter the groove 410, and prevents the structural strength of the middle partition plate 400 from being affected by collision between the mandrel 201 and the bottom 422 of the bearing container 420, improving stability of the powertrain 20.

In an embodiment, as shown in FIG. 7, along the axial direction O of the drive motor 200, a length of the protrusion 440 is greater than a depth of one bearing container 420.

In this embodiment of this application, as shown in FIG. 4 and FIG. 7, along the axial direction O of the drive motor 200, the length of the protrusion 440 is denoted as L4, the depth of the bearing container 420 is denoted as L5, and L4>L5. In this case, the groove 410 distributed on the end face 441 of the protrusion 440 may be farther away from the bottom 422 of the bearing container 420, and the mandrel 201 may be quickly assembled with the groove 410 in the end face 441 of the protrusion 440.

In this embodiment of this application, as shown in FIG. 3 and FIG. 7, the length of the protrusion 440 along the axial direction O of the drive motor 200 is relatively large, the groove 410 is located in the end face 441 of the protrusion 440, and the oil outlet hole 4110 is located at the bottom 411 of the groove 410. Therefore, it is more convenient to feed the oil in the internal flow channel 430 of the middle partition plate 400 from the oil outlet hole 4110 into the motor shaft 210 through a flow channel in the protrusion 440.

In an embodiment, as shown in FIG. 6, along the axial direction O of the drive motor 200, a depth of the groove 410 is less than the length of the protrusion 440.

In this embodiment of this application, as shown in FIG. 4 and FIG. 6, along the axial direction O of the drive motor 200, the depth of the groove 410 is denoted as L6, the length of the protrusion 440 is L4, and L6<L4. L6 is relatively small, so that it is more convenient to process the groove 410 without affecting structural strength of the protrusion 440. L4 is relatively large, so that the structural strength of the protrusion 440 is strong, which allows the groove 410 to be distributed closer to an assembly direction of the rotor 230 of the drive motor 200. This facilitates the mandrel 201 to quickly enter the groove 410. L6<L4, which helps keep the mandrel 201 stable and reliable when the mandrel 201 is quickly assembled with the groove 410.

In this embodiment of this application, if the depth of the groove 410 is greater than the length of the protrusion 440, the groove 410 needs to be arranged based on a thickness of the middle partition plate 400, which easily causes a reduction in structural strength of the housing 20a.

In an embodiment, as shown in FIG. 3 and FIG. 6, the motor shaft 210 includes a shaft hole 212, the shaft hole 212 extends through the motor shaft 210 along the axial direction O of the drive motor 200, the protrusion 440 protrudes toward the shaft hole 212, and an inner diameter of the shaft hole 212 is greater than an inner diameter of the oil outlet hole 4110.

In this embodiment of this application, the motor shaft 210 includes the shaft hole 212, and the shaft hole 212 extends through the motor shaft 210 along the axial direction O of the drive motor 200, so that oil can flow in the shaft hole 212 of the motor shaft 210, thereby cooling the rotor 230 of the drive motor 200.

In this embodiment of this application, the protrusion 440 protrudes toward the shaft hole 212, so that the groove 410 distributed on the end face 441 of the protrusion 440 and that is away from the bottom 422 of the bearing container 420 and the oil outlet hole 4110 of the bottom 411 of the groove 410 may also face the shaft hole 212. Therefore, it is more convenient to smoothly output the oil in the internal flow channel 430 of the middle partition plate 400 from the oil outlet hole 4110 into a shaft bore of the motor shaft 210 through an internal flow channel in the protrusion 440.

In this embodiment of this application, the inner diameter of the shaft hole 212 is denoted as L7, the inner diameter of the oil outlet hole 4110 is denoted as L8, and L7>L8. In this way, when the shaft hole 212 can accommodate the mandrel 201, the oil outlet hole 4110 in the bottom 411 of the groove 410 cannot accommodate the mandrel 201, to avoid that the mandrel 201 passes through the oil outlet hole 4110 and cannot stably guide assembly of the motor shaft 210 and the rotor 230, thereby ensuring assembly reliability.

In an embodiment, as shown in FIG. 6, the shaft hole 212 includes a first segment 2121 and a second segment 2122. An inner diameter of the first segment 2121 is greater than an inner diameter of the second segment 2122, and the protrusion 440 is configured to be inserted into the first segment 2121. A part that is of the motor shaft 210 and in which the second segment 2122 is located is configured to fasten the rotor 230. Along the axial direction O of the drive motor 200, the protrusion 440 is spaced from the second segment 2122, and the opening 412 of the groove 410 faces the second segment 2122.

In this embodiment of this application, as shown in FIG. 3 and FIG. 6, the inner diameter of the first segment 2121 is denoted as L9, the inner diameter of the second segment 2122 is denoted as L10, and L9>L10. The protrusion 440 is configured to be inserted into the first segment 2121, and L9 is relatively large, so that the protrusion 440 is conveniently inserted into the first segment 2121, and further along the radial direction R of the drive motor 200, the protrusion 440 is spaced from the first segment 2121, to avoid abrasion between the first segment 2121 and the protrusion 440 during rotation of the motor shaft 210. L10 is relatively small, to facilitate gap-free fit between the mandrel 201 and the shaft hole 212 of the motor shaft 210, so that an assembly process of the rotor 230 and the motor shaft 210 is more stable and reliable, and the part that is of the motor shaft 210 and in which the second segment 2122 is located has higher structural strength, further ensuring reliable fastening of the rotor 230.

In this embodiment of this application, along the axial direction O of the drive motor 200, the protrusion 440 is spaced from the second segment 2122, to avoid abrasion between the protrusion 440 and the second segment 2122 of the motor shaft 210 during rotation.

In this embodiment of this application, the opening 412 of the groove 410 faces the second segment 2122, so that it is more convenient to directly feed oil from the oil outlet hole 4110 in the bottom 411 of the groove 410 into the second segment 2122 of the shaft hole 212 through the opening 412 of the groove 410. This also helps reduce leakage of the oil through a gap between the first segment 2121 and the opening 412 of the groove 410, allowing more oil to be delivered through the motor shaft 210, thereby ensuring that the oil can meet a lubrication requirement of the rotor 230 of the drive motor 200 and the planetary reducer 300.

In an embodiment, as shown in FIG. 6, a limiting groove 213 is provided in an outer side of the motor shaft 210. The limiting groove 213 is disposed around an outer side wall of the first segment 2121 of the shaft hole 212. The limiting groove 213 is configured to abut against the bearing 211 of the motor shaft 210, so that the rotor 230 and the motor shaft 210 can be limited by the limiting groove 213 and the bearing container 420 when being assembled by using the mandrel 201, making the assembly more precise.

In an embodiment, as shown in FIG. 6, a gap between the protrusion 440 and the first segment 2121 is used for accommodating a conductive ring 500, and the conductive ring 500 is configured to electrically connect the protrusion 440 and the first segment 2121.

In this embodiment of this application, the gap between the protrusion 440 and the first segment 2121 is used for accommodating the conductive ring 500. Compared with disposing the conductive ring 500 on an outer wall of the motor shaft 210, reusing space of the protrusion 440 along the radial direction R of the drive motor 200 to arrange the conductive ring 500 helps shorten an axial size of the powertrain 20. The conductive ring 500 is configured to electrically connect the protrusion 440 and the first segment 2121, so that a shaft current generated during rotation of the motor shaft 210 may be conducted to the conductive ring 500 through the first segment 2121, and then be conducted to the protrusion 440 on the middle partition plate 400 through the conductive ring 500, thereby implementing grounding, and avoiding electric corrosion of the bearing 211 of the motor shaft 210.

FIG. 9 is another diagram of a housing 20a of a powertrain 20 according to an embodiment of this application.

In an embodiment, as shown in FIG. 6 and FIG. 9, the protrusion 440 includes a fastening segment 442 and a connection segment 443. The fastening segment 442 is closer to the second segment 2122 than the connection segment 443, an outer diameter of the connection segment 443 is greater than an outer diameter of the fastening segment 442, the fastening segment 442 is configured to fasten the conductive ring 500, and an end face 4431 that is of the connection segment 443 and that faces the fastening segment 442 is configured to abut against the conductive ring 500.

In this embodiment of this application, the outer diameter of the connection segment 443 is denoted as L11, the outer diameter of the fastening segment 442 is denoted as L12, the fastening segment 442 is configured to fasten the conductive ring 500, and L11>L12, so that it is more convenient to fasten the conductive ring 500 to the fastening segment 442 from a direction of the opening 421 of the bearing container 420. L11>L12, so that the end face 4431 that is of the connection segment 443 and that faces the fastening segment 442 may be used to abut against the conductive ring 500, to prevent the conductive ring 500 from rotating with the motor shaft 210 in the first segment 2121.

In an embodiment, as shown in FIG. 3 and FIG. 6, the shaft hole 212 is configured to accommodate an oil guide pipe 600, one end 610 of the oil guide pipe 600 is fastened to the protrusion 440 to receive oil delivered from the oil outlet hole 4110, and the other end 620 of the oil guide pipe 600 is configured to extend into the planetary reducer 300 to deliver the oil to the planetary reducer 300.

In this embodiment of this application, because the protrusion 440 is located in the first segment 2121 of the shaft hole 212, an oil deliver distance of the oil outlet hole 4110 in the protrusion 440 is short. The oil guide pipe 600 is disposed in the shaft hole 212 of the motor shaft 210, the end 610 of the oil guide pipe 600 is fastened to the protrusion 440 to receive the oil delivered by the oil outlet hole 4110, and the other end 620 of the oil guide pipe 600 is configured to extend into the planetary reducer 300 to deliver the oil to the planetary reducer 300, to prevent the oil in the shaft hole 212 of the motor shaft 210 from being completely thrown out of the motor shaft 210 during rotation of the motor shaft 210, so that the oil output from the oil outlet hole 4110 can be delivered for a longer distance. Further, this ensures that the planetary reducer 300 at the other end 620 of the oil guide pipe 600 can receive sufficient oil for lubrication, to meet a lubrication requirement of the gear shaft assembly 310 of the planetary reducer 300.

In an embodiment, the oil guide pipe 600 is rotatably connected to the motor shaft 210 by using a support bearing 630.

In an embodiment, as shown in FIG. 3, both an outer wall of the oil guide pipe 600 and the outer wall of the motor shaft 210 include a through hole, so that oil in the oil guide pipe 600 may flow out from the through hole in the outer wall of the oil guide pipe 600 and the through hole in the outer wall of the motor shaft 210 to the rotor 230 of the drive motor 200, thereby cooling the rotor 230 and ensuring normal operation of the drive motor 200.

The foregoing describes in detail the powertrain, the mounting apparatus and the electric vehicle provided in embodiments of this application. The principles and embodiments in this application are described in this specification by using specific examples. The descriptions about embodiments are merely provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A powertrain, wherein a housing of the powertrain is configured to accommodate rotors and stators of two drive motors, the housing comprises a middle partition plate, the middle partition plate comprises two bearing containers and two grooves, openings of the two bearing containers face away from each other along an axial direction of the drive motor, and each bearing container is configured to rotatably connect to a motor shaft of one drive motor; and
the two grooves are respectively distributed at bottoms of the two bearing containers, openings of the grooves face away from each other along the axial direction of the drive motor, a bottom of each groove comprises an oil outlet hole, and the oil outlet holes of the two grooves are configured to respectively deliver oil transmitted by an internal flow channel of the middle partition plate to the motor shafts that are rotatably connected to the two bearing containers.

2. The powertrain according to claim 1, wherein the groove is coaxial with a bearing container in which the groove is located.

3. The powertrain according to claim 1 or 2, wherein along a radial direction of the drive motor, a diameter of the oil outlet hole is less than a width of the opening of the groove.

4. The powertrain according to any one of claims 1 to 3, wherein along the radial direction of the drive motor, a width of the bottom of the groove is less than the width of the opening of the groove.

5. The powertrain according to claim 4, wherein along the radial direction of the drive motor, a width of the groove gradually increases from the bottom of the groove to the opening of the groove.

6. The powertrain according to any one of claims 1 to 5, wherein the middle partition plate comprises a protrusion, the protrusion protrudes from the bottom of the bearing container, and the groove is distributed on an end face that is of the protrusion and that is away from the bottom of the bearing container.

7. The powertrain according to claim 6, wherein along the axial direction of the drive motor, a length of the protrusion is greater than a depth of one bearing container.

8. The powertrain according to claim 6, wherein along the axial direction of the drive motor, a depth of the groove is less than a length of the protrusion.

9. The powertrain according to claim 6, wherein the motor shaft comprises a shaft hole, the shaft hole extends through the motor shaft along the axial direction of the drive motor, the protrusion protrudes toward the shaft hole, and an inner diameter of the shaft hole is greater than an inner diameter of the oil outlet hole.

10. The powertrain according to claim 9, wherein the shaft hole comprises a first segment and a second segment, an inner diameter of the first segment is greater than an inner diameter of the second segment, the protrusion is configured to be inserted into the first segment, a part that is of the motor shaft and in which the second segment is located is configured to fasten the rotor, the protrusion is spaced from the second segment along the axial direction of the drive motor, and the opening of the groove faces the second segment.

11. The powertrain according to claim 10, wherein a gap between the protrusion and the first segment is used for accommodating a conductive ring, and the conductive ring is configured to electrically connect the protrusion and the first segment.

12. The powertrain according to claim 11, wherein the protrusion comprises a fastening segment and a connection segment, the fastening segment is closer to the second segment than the connection segment, an outer diameter of the connection segment is greater than an outer diameter of the fastening segment, the fastening segment is configured to fasten the conductive ring, and an end face that is of the connection segment and that faces the fastening segment is configured to abut against the conductive ring.

13. The powertrain according to claim 10, wherein the shaft hole is configured to accommodate an oil guide pipe, one end of the oil guide pipe is fastened to the protrusion to receive oil delivered from the oil outlet hole, and the other end of the oil guide pipe is configured to extend into a planetary reducer to deliver the oil to the planetary reducer.

14. A mounting apparatus for a powertrain, wherein the mounting apparatus is configured to mount the powertrain according to any one of claims 1 to 13, the housing is configured to fasten the stator, the motor shaft is configured to fasten the rotor, the mounting apparatus comprises a mandrel, one end of the mandrel is inserted into the groove and abuts against the bottom or a circumferential wall of the groove, and the motor shaft fastened to the rotor is configured to be sleeved on an outer periphery of the mandrel and move to the bearing container of the middle partition plate along the mandrel.

15. An electric vehicle, wherein the electric vehicle comprises a vehicle frame and the powertrain according to any one of claims 1 to 13, the vehicle frame is configured to fasten the powertrain, and the drive motor of the powertrain is configured to drive a wheel.
